# EUROPEAN PATENT SPECIFICATION

(11) **EP 4 127 284 B1**
(45) Date of publication and mention of the grant of the patent: **24.12.2025**
(21) Application number: 21730279.3
(22) Date of filing: 01.04.2021
(51) Int. Cl.: D01H 7/04, D01H 1/244, D01H 4/14, F01P 1/00, H02K 9/00, B23Q 5/04, A61C 1/02

(54) **ELECTRO-PNEUMATIC DRIVE UNIT, MAINLY FOR DRIVING HIGH-SPEED SPINDLES**
ELEKTROPNEUMATISCHE ANTRIEBSEINHEIT, INSBESONDERE ZUM ANTRIEB VON HOCHGESCHWINDIGKEITSSPINDELN
UNITÉ D'ENTRAÎNEMENT ÉLECTROPNEUMATIQUE, PERMETTANT PRINCIPALEMENT D'ENTRAÎNER DES BROCHES À VITESSE ÉLEVÉE

(30) Priority: 02.04.2020 SK PP332020; 02.04.2020 SK PV462020 U
(43) Date of publication of application: 08.02.2023
(73) Proprietor: Slovenská Technická Univerzita v Bratislave, 812 43 Bratislava (SK); Kinex Bearings, A.S., 014 83 Bytca (SK)
(72) Inventor: SOOS , ubomír, 841 01 Bratislava (SK); ONDRUSKA, Juraj, 831 07 Bratislava (SK); BÁBICS, Jozef, 930 34 Holice (SK); ONDEROVÁ, Iveta, 851 01 Bratislava (SK); BUCKO, ubo, 014 01 Byt a (SK); BUDICKÝ, Tomá, 058 01 Poprad (SK)
(74) Representative: Porubcan, Róbert
(86) International application number: PCT/IB2021/052747
(87) International publication number: WO 2021/198978

(56) References cited:
- EP-A1- 1 717 468
- CN-U- 209 178 543
- DE-C- 931 627
- FR-A- 988 877
- JP-A- 2013 081 272
- JP-U- S57 168 975
- KR-A- 20150 117 419
- US-A- 6 146 113

## Description

### Field of technology

The invention concerns a construction of a hybrid electro-pneumatic drive (or propulsion) of spindle, for example in spinning units, machine tools, workshop tools, medical technology or special technology. It can be applied everywhere where there is a need for maximalization of the power of the electric drive and where there is a need for increase of the efficacy of the cooling, mainly in case of high speed or high revs. The invention falls within the field of machining and general industry.

### Prior state of the art

Multiple types of spindles are currently used in the production. Typically, electric spindles or pneumatic spindles by NAKANISHI company are used, or electric spindles by SycoTech company, or pneumatic spindles by Mechatron company. Special application of drive is drive by cooling liquid of the machine tool in case of SPINJET spindles by Tungaloy.

In the field of spinning machines and drive of spinning units, a principle of drive by endless belt is used, whereby the belt is in contact with multiple spindles and the speed of movement of the belt is transferred to the circumferential speed of the shaft by friction. It then uses a principle of a rolling of the shaft between two drive rollers with parallel axes (by Autocoro company), and it also uses an electric drive without various types of bearings. These principles apply in companies such as Schlafhorst, SAURER, RIETER, SAVIO. Current principles of the drive of the spindles in the spinning machines in the textile industry are based mainly on the on the mass driving of multiple spindles by a single electric aggregate. During the failure of the drive of any of the spindles it has to be stopped, which lowers the performance of the whole spinning machine. During the mass drive of the spindles there are differences in frequencies of rotations between individual spindles, which is caused by delay or different mechanical features of the individual spindles. During mass drive it is not possible to additionally synchronize the rotations of individual spindles or to control them independently if such production need arises. The monitoring of the state of individual spindles or the eventual correction of their operation is very difficult during mass drive. Hitherto, the share of the spinning spindles with rotation frequency above 90 000 rpm increases. From the point of view of the tendency of the development of the machines we can presume that the demand for the deposition which could handle rotation frequency of 100 000 to 130 000 rpm or more will be relevant. The increase of the frequency rotation of the spinning rotors places higher demands on the spinning machine itself, and mainly on the spinning units themselves and mainly on the deposition of the spinning rotors and their drive.

Publications CN10567170 (A), CN210066017 (U), CN205501498 (U) disclose electro-pneumatic spinning spindle which has an electric engine and the pneumatic control for the threading of the thread (yarn) with input air channel in the shaft of the rotor. This solution allows to automatize the threading of the thread, but the electric and pneumatic parts of the spindles do not cooperate on the rotating performance of the spindle.

Publication JPS57168975U describes rotary machine in which an electric motor and a pneumatic motor are combined, When the rotating electric machine is in an emergency, the compressed gas from the compressed air supply source is supplied to the pneumatic motor. Publication JP2013081272A describes an electric hydraulic hybrid motor which allows a hydraulic motor and an electric motor to be uniaxially disposed, the electric motor cools using a hydraulic fluid. File US6146113A discloses a compact hydraulic unit which can be used for cooling an electric motor sufficiently for continuous operation,

Electro-pneumatic drive units are known, where electric and pneumatic element ensure different types of propulsion, for example pursuant to DE102008061183 (A1), where the electric drive produces a rotational movement and the pneumatic drive produces a force impact in the axis of rotation. Demands for higher and higher performance of the compact spindles, mainly high-speed spindles with high level of diagnostics and regulation pursuant to the Industry 4.0 philosophy, are more and more common on the market. Pursuant to the described state of the art, there is an opportunity to address these demands of the industry by technological means which are capable to satisfy the complex demands for the modern spindles. The result of this effort is a construction of the hybrid electro-pneumatic drive of the spindle, disclosed in this invention.

### The essence of the invention

The invention is defined in the patent claims 1 to 10. An important feature of the invention is the arrangement of the electric engine and the pneumatic engine in a single axis, where the electro-pneumatic drive unit has an electric engine and pneumatic engine placed in a body in such a way that the outgoing shafts are mechanically coupled and the output of the propulsion air from the pneumatic engine enters inside the electric engine, where it is mainly used for cooling of the electric engine. The electric engine and the pneumatic engine are preferably arranged in such a way that their outer sheaths join each other or their diameters are not different by more than 50%, which produces a compact drive unit. Usually, the diameters of the inner rotational elements of both engines will differ by less than 40%, which means that the rotor of the electric engine and the turbine or turbines of the pneumatic engine will have a diameter which is mutually similar with a 40% margin of difference.

The pressure propulsion air serves the cooling of the electric engine after it gives away its energy in the pneumatic engine, which produces a synergic effect. Electric engines are usually cooled by a flow of air generated by a fan directly connected with the rotor, which consumes some power on the output of the electric engine. In the arrangement according to this invention the electric engine does not need its own fan which consumes part of the energy, but, on contrary, the performance of the electric engine is supported by the additional power of the pneumatic engine. In the preferable arrangement, and for the higher performance of the turbine, the pneumatic engine will have at least two vane impellers placed one after another.

In order to achieve effective cooling of the electric engine, the propulsion air coming out of the pneumatic engine is led into the gap between the rotor and the stator and also to the outer circumference of the stator. Preferably, the two-zone cooling is produced.

The deficiencies in the prior art are remedied by the construction of the hybrid electro-pneumatic drive of the spindle according to this invention, whose basis is the carrier body - a frame -, whereby a central shaft with the electric module including an electric engine is based in this body in the bearings. The essence of the invention of the hybrid electro-pneumatic drive of the spindle lies in the fact that the central shaft of the electric engine formed by the stator and the rotor is connected with the shaft of the pneumatic engine with the inbuilt turbine by a serial constructional connection, for example by conic friction connection. In this grouping the central shaft is propelled, driven in a hybrid way by cooperation of the electric engine and the pneumatic engine. Aside from the connection of the rotor of the electric engine with the rotor of the pneumatic engine by means of various forms of connectors, a solution is also possible in which the electric engine and pneumatic engine share a common shaft designed for the carrying of the rotors of both engines, or where both rotors are produced within this shaft. The choice of the construction of the connecting member between the shafts of the electric engine and the pneumatic engines ensures the desired damping features, for example suppression of the longitudinal oscillations or vibrations of the set.

The mechanical coupling of the shafts of both engines or a single common shaft allow one to produce a simpler deposition, where aside from the typical two pairs of the bearings for each engine one can use placement on the three bearings or only on the two bearings. Preferably, the shaft is placed on the bearings on both sides of the rotor and the pneumatic engine has its own rear bearings and front bearing which is common for the deposition of the rotor.

The sheath of the pneumatic engine follows upon the sheath of the electric engine in such a way that between the pneumatic engine and the electric engine the axial air channels of the two-zone air cooling are arranged. The pneumatic engine has at least one opening for the intake of the pressure air.

Two-zone air cooling with the opposite direction of the flow consists of the ribbing of the first stator axial channels with the first output channel openings, which are alternately placed in the ribbing with the second stator axial channels with the second output channel openings, whereby the first stator axial channels with the first output channel openings and the second stator axial channels with the second output channel openings are covered by the sheathing of the stator, by means of which it is possible to proportionally set the flow of the colling air from the one zone in the gap between rotor/stator and the bridge with the second zone of the cooling air, that is, directly on the outer sheath with the ribbing. The sheathing can be slidable so that the throttling of the cross-section can regulate the flow of the first and second zone. The hybrid operation favorably cumulates the mechanical performance of the electric engine and the pneumatic engine with the use of the waste air of the pneumatic engine for the effective whole volume cooling of the electric engine. That is, the overall performance of the drive is ensured by the combination of the pneumatic engine and the electric engine during hybrid operation.

In order to achieve a reliable function of the electro-pneumatic drive unit at high speed (in order of tens of thousands of rotations per minute), it is preferable if the outer diameters of the rotating components are the smallest possible at the desired performance. With approximately identical outer diameters of the electric engine and the pneumatic engine the performance of the pneumatic engine is significantly smaller, usually less than 50% of the performance of the electric engine. In order to achieve effective dimensions of the shafts, it is preferably if the electric engine within the body of the electro-pneumatic drive unit is placed on the output side. In such arrangement the shaft of the pneumatic engine is burdened only by its own, that is, lower torque, compared to the torque during opposite orientation of the engines in the body of the electro-pneumatic drive unit.

The invention ensures that the waste air during the cooling process flows in a certain direction already in the narrow gap between the moving rotor and the stator, which produces an effect of the pneumatic bearing increasing the overall solidity and stability of the operation of the hybrid spindle. The air pillow between the rotor and the stator ensures the spring and damping effect. The air pressed from the output of the pneumatic engine to the relatively narrow circumferential crevice between the rotor and the stator produces an effect of the pneumatic bearing, which at high rotation speed damps the potential undesired vibration of the set.

The effective recycling of the waste air from the pneumatic engine is technologically ensured in such a way that the waste air from the front part of the pneumatic engine flows directly inside the electric engine, where by help of the system of openings from the inner surface of the body of the deposition of the stator it is proportionally distributed to the separated zones of cooling formed by the ribbing with the alternated arrangement and the slidable outer sheathing. Constant flow of the air through the driven machinery - the turbine of the pneumatic engine - stabilizes the rotation frequency of the hybrid drive. The overall active cooling performance of the electric drive is ensured only by waste air from the pneumatic drive. This solution also allows for optimal cooling of the electric drive as need arises, during the changing load of the spindle and, therefore, the electric engine. The temperature sensors in the stator of the electric engine can be used for the regulation of the performance of the pneumatic engine which directly determines the performance of the cooling of the electric engine.

Hybrid electro-pneumatic drive of the spindle is further addressed in such a way that the serial constructional connection of the central shaft with the pneumatic engine is in the preferable realization formed by the conic friction clutch with the conic protrusion on one end of the central shaft with the grooves, and friction segments placed in that grooves, and on the other side it is formed by the conic opening on the end of the shaft of the pneumatic engine. The friction segments ensure the compensation of the imprecisions of the connection and function as an absorber and damper of the vibrations of the set. The prestress in the friction joint allows one to set the threaded connection between the rear flange of the electric engine and the body of the pneumatic engine. Such constructional solution allows that the electric engine during starting and during operation is connected with the pneumatic engine as needed. This allows one to achieve optimal operating parameters, such as high acceleration during starting, or elimination of change in rotation frequency of the spindle due to the alternating load during its operation. Such arrangement introduces an adjustable axial force into the central shaft, which allows one to continuously fine tune the bearing depositions of the central shaft from the point of view of its own frequencies and the vibrations of the set.

The operation of the electro-pneumatic drive unit is as follows. In the basic frame of the spindle the central shaft is placed by help of bearings, whereby the shaft is driven in the hybrid way by cooperation of the electric engine and the pneumatic engine. The hybrid operation advantageously cumulates the mechanical performance of the electric engine and the pneumatic engine, and uses of the waste air from the pneumatic engine for the effective whole volume cooling of the electric engine. During the cooling process the waste air directionally flows in the tight, narrow gap between the moving rotor and the stator, which produces the effect of the pneumatic bearing. The air pillow between the rotor and the stator ensures spring and damping effect. The effective recycling of the waste air from the pneumatic engine is technologically ensured in such a way that the waste air from the front part of the pneumatic engine flows directly inside the electric engine, where by help of the system of openings from the inner surface of the body of the deposition of the stator it is proportionally distributed to the two separated zones of cooling formed by the ribbing with the alternated arrangement and the slidable outer sheathing. The channel openings connect the inners space of the stator with the grooves. The grooves are on the outside circumference of the stator formed by ribs, whereby the ribs lean onto the circumferential sheath. The air flows from the inside of the electric engine onto the outer side through the channel openings, the sheath and the ribs direct the flow, whereby the channel opening is placed on the one end of the groove and the sheath by its open edge produces a protrusion on the opposite side of the groove. Constant flow of the air through the driven machinery of the pneumatic engine stabilizes the rotation frequency of the hybrid drive.

The connection of the shafts of the electric module and the pneumatic module is preferably realized by the conic ending of the central shaft with the grooves for the friction segments. The friction segments ensure the compensation of the imprecisions of the connection and function as an absorber and damper of the vibrations of the set. The prestress in the friction joint allows one to set the threaded connection between the rear flange of the electric engine and the body of the pneumatic engine. Such arrangement introduces an adjustable axial force into the central shaft, which allows one to continuously fine tune the bearing depositions of the central shaft from the point of view of its own frequencies and the vibrations of the set. The change of the axial pressure onto the central shaft changes the contact angle of the rolling bodies and the rolling tracks.

The advantages of the hybrid electro-pneumatic drive of the spindle according to this invention are obvious from its outwardly manifested effects. The effects of this invention lie mainly in the fact that each rotor of the multi-rotor device is driven independently, that is, if any rotor stops working, the others are unaffected. The rotation frequency of the particular rotor can be simply altered and measured pursuant to the processed material, independently of other rotor units. The hybrid drive has higher starting acceleration than some other conventional drives. The starting, initiation of such a spindle can be controlled better. This concept can be used with other special devices and spinning units. Working frequencies of the power supply of the electric part of the hybrid drive can be altered pursuant to the context of the physical features of the pressure gas on the input to the pneumatic part of the drive and therefore achieve the optimal working regime. Each spindle is driven independently - if any drive stops working, other units are not affected. The rotation frequency of the particular rotor can be simply altered and measured pursuant to the application of the propulsion or drive, independently of other rotor units. The hybrid drive has higher starting acceleration than some other conventional drives. The starting, initiation of such a spindle can be controlled by means of pneumatic drive. This concept can be used with other special devices and spinning units. Working frequencies of the power supply of the electric part of the hybrid drive can be altered pursuant to the context of the physical features of the pressure gas on the input to the pneumatic part of the drive and therefore achieve the optimal working regime. The hybrid drive can be advantageously used for the drive of rotors used in other machines working with high rotation frequencies (machining spindles, dental drills, special grinders, and so on).

### Description of drawings

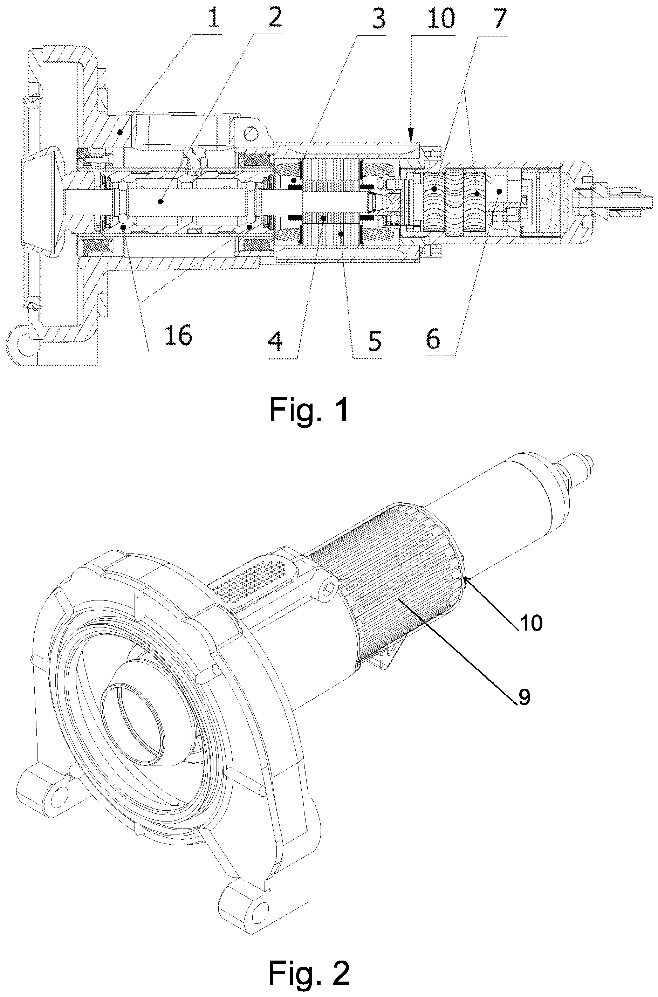

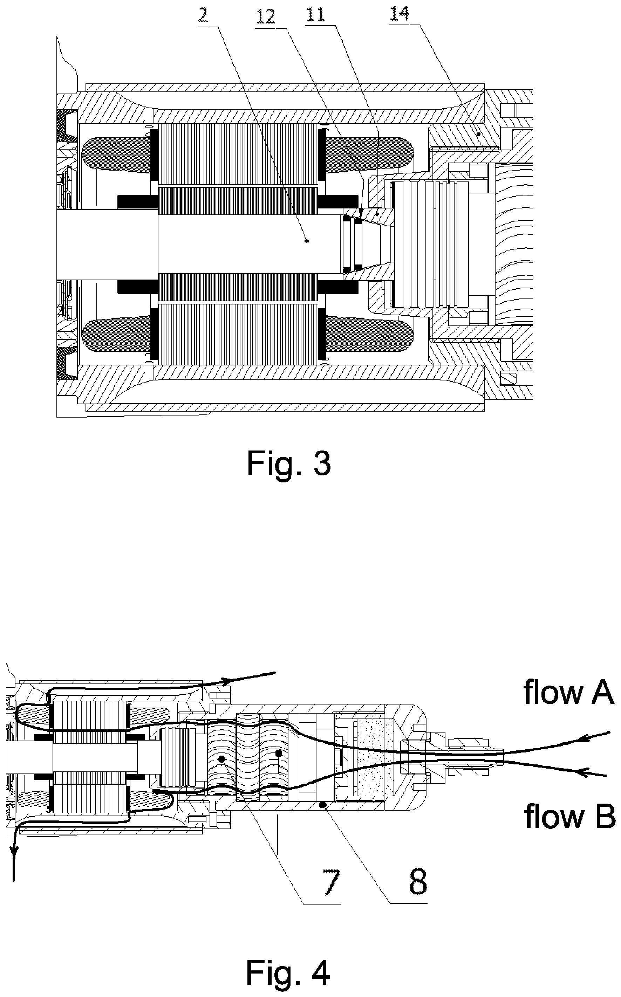

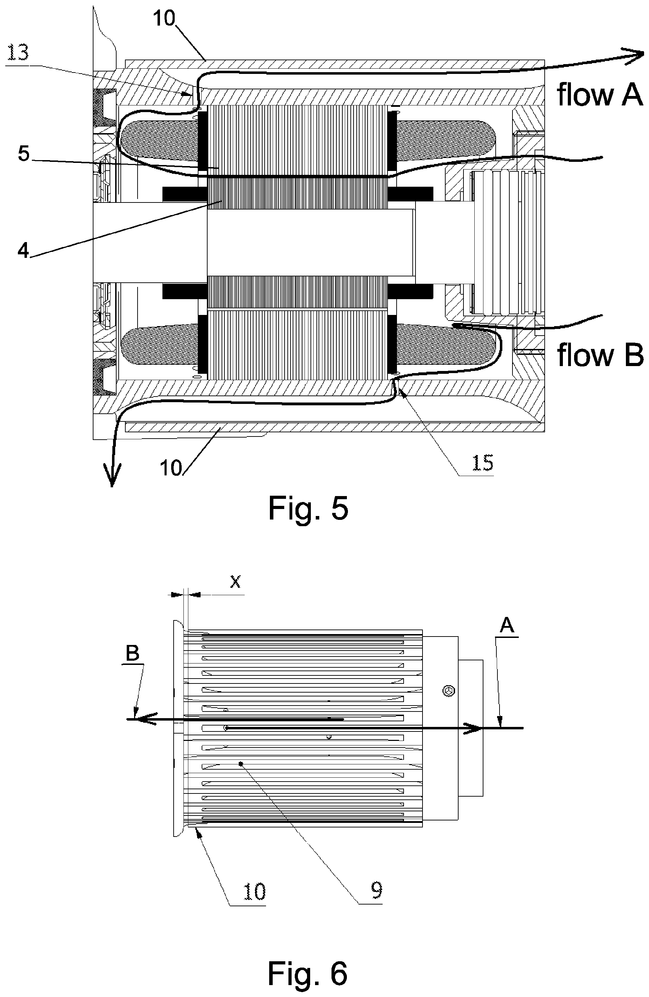

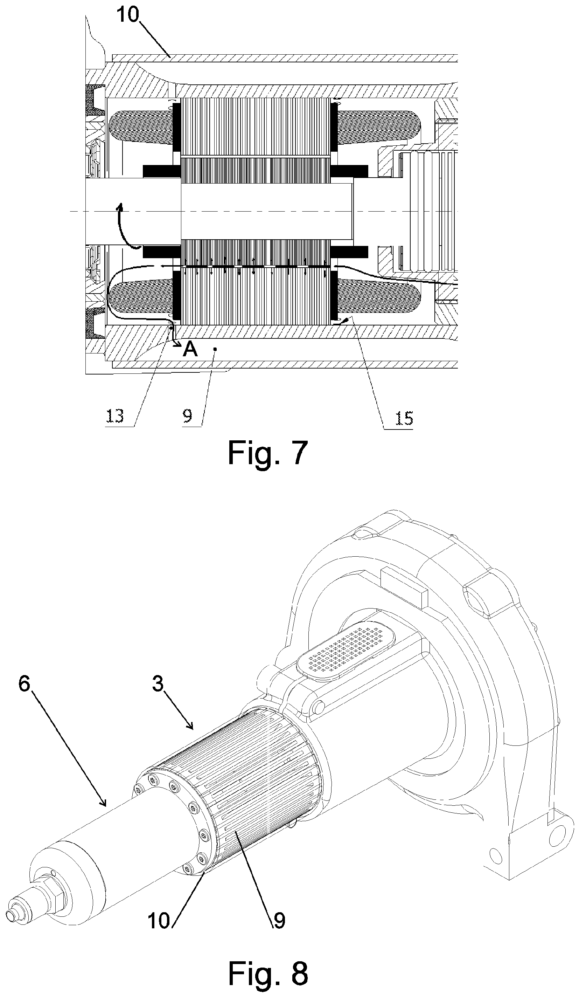

Electro-pneumatic drive unit according to this invention is further disclosed on the particular realizations depicted on the drawings 1 to 10, where fig. 1 depicts a compact set in the side section. Fig. 2 depicts the hybrid electro-pneumatic spindle in the axonometric view. Fig. 3 depicts in the side section the detail of the connection of the electric engine with the pneumatic engine. Fig. 4 in side section depicts the lines of air flow for the two zones of cooling leading to the pneumatic engine and the electric engine. Fig. 5 depicts in detailed side view the lines of air flow for the two zones of cooling leading to the pneumatic engine and the electric engine. In figures 4 and 5, "flow A" denotes the line of air flow A, "flow B" denotes the line of air flow B. Fig. 6 shows in a side view the opposite orientation of the lines of air flow for the rolling two zones of the cooling between the stator and the sheath of the electric engine. The arrows depict the flow of the air in lines A and B, and for the greater clarity the arrows are shown only for two neighboring channels. Fig. 7 depicts an auxiliary pneumatic bearing formed by the air flows from one zone of the cooling between the stator and the rotor of the electric engine in the side view.

Figure 8 is a spatial view of the electro-pneumatic drive unit from the side of the pneumatic engine, whereby the sheath is depicted as transparent so that the ribbing of the stator of the electric engine is visible.

Figure 9 is a cross-section of the electric engine with the air channels on the outer circumference of the stator.

Figure 10 is a spatial view of the longitudinal section of the electro-pneumatic drive unit.

### Examples of realization

It is understood that the individual realizations of the electro-pneumatic drive unit according to this invention are presented only for the purposes of illustration and cannot be considered as limiting the scope of protection. A person skilled in the art will find, or will be able to find, by no more than a routine experimentation, many equivalents of the specific realizations of the invention. Such equivalents will also fall in the scope of protection of the following patent claims.

Proper choice of the material and dimensioning will not be a problem for a person skilled in the art, despite the fact that these features are not addressed in detail.

### Example 1

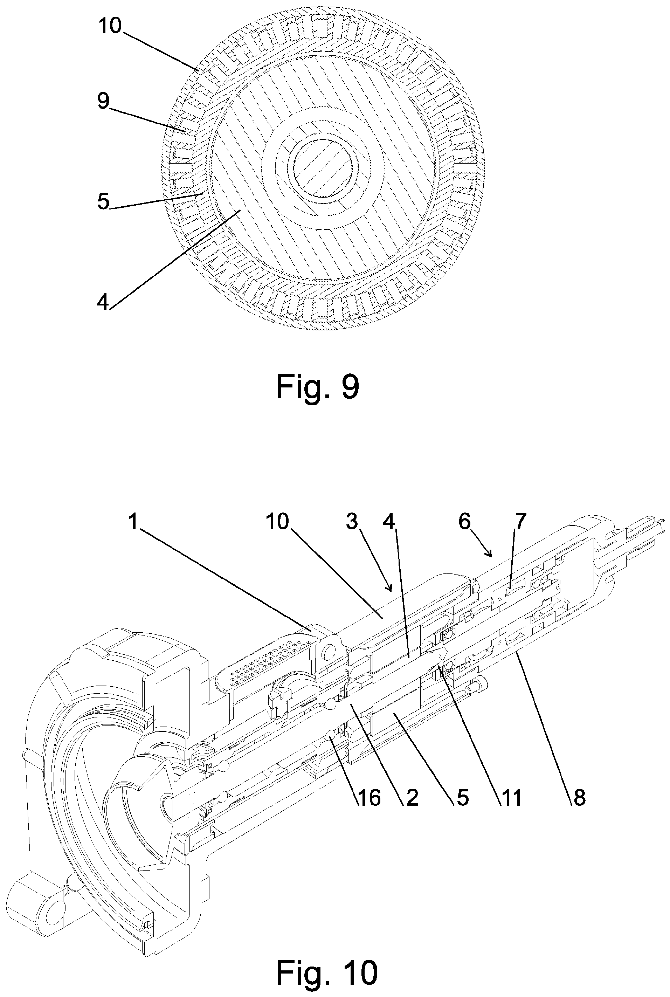

In this example of the particular realization of the invention a construction of the hybrid electro-pneumatic drive of the spindle, as depicted on the figures 1 to 10, is disclosed. The basis of the hybrid electro-pneumatic drive of the spindle is a carrier body 1, that is, a frame, whereby the central shaft 2 with the electric engine 3 is placed in the frame in the bearings 16. The central shaft 2 of the electric engine 3 formed by a stator 5 and a rotor 4 is connected to the pneumatic engine 6 with the inbuilt turbine 7 as a driving machinery by the serial constructional connection. The serial constructional connection is formed by the conic friction clutch 11 formed by the conic protrusion on the one end of the shaft 2 with the grooves and in these grooves there are fiction segments 12 and on the other side it is formed by the conic opening on the end of the shaft of the pneumatic engine 6. The prestress of the friction clutch 11 sets the threaded connection between the rear flange 14 of the electric engine 3 and the body of the pneumatic engine 6. The sheath 8 of the pneumatic engine 6 follows the sheath 10 of the electric engine 3 in such a way that between the pneumatic engine 6 and the electric engine 3 there are air channels of the two-zone air cooling arranged. The pneumatic engine 6 has at least one opening for the intake of the pressure air. The two-zone air cooling consists of ribbing 9 of the first stator axial channels with the first output channel openings 13, which are alternately placed in the ribbing 9 with the second stator axial channels with the second output channel openings 15, whereby the first stator axial channels with the first output channel openings 13 and the second stator axial channels with the second output channel openings 15 are covered by the movable sheath 10 of the stator 5.

### Example 2

In this example the electro-pneumatic drive unit, mainly for the drive of high-speed spindles, includes one common shaft which runs through the electric engine 3 and the pneumatic engine 6.

The ribbing 9 on the outer circumference of the stator 5 of the electric engine 6 completes the grooves for the guiding of the air which runs through the channel openings 13, 15 from inside the electric engine. The grooves and the sheath 10 leaning onto the ribbing 9 produce channels through which the air flows oppositely towards the output by the edge of the sheath 10. In order to achieve this effect, the channel openings 13, 15 are placed alternately on the opposite sides of the neighboring grooves. Axial sliding of the sheath 10 sets the ratio of the flow through the first and second set of the grooves.

### Example 3

Electro-pneumatic drive unit in this example has an electric engine 3 placed in the body 1 on the output side of the electro-pneumatic drive unit and the pneumatic engine 6 is placed in the opposite way. The torque of the pneumatic engine 6 is transferred to the output of the electro-pneumatic drive unit by the shaft 2 of the electric engine. The performance of the electric engine 3 in this example forms more than 80% of the overall performance of the electro-pneumatic drive unit; for example, the performance of the electric engine 3 is around 300 W and the performance of the pneumatic engine 6 ranges between 30 W to 60 W.

### Industrial applicability

Electro-pneumatic drive unit according to this invention can be applied as a drive of rotors used in textile industry and in other machines operating at high rotation frequencies such as machining spindles, dental drills, special grinders, and so on.

### List of symbols

- 1 -: body
- 2 -: central shaft
- 3 -: electric engine
- 4 -: rotor
- 5 -: stator
- 6 -: pneumatic engine
- 7 -: turbine
- 8 -: sheath of the pneumatic engine
- 9 -: ribbing
- 10 -: sheath of the electric engine
- 11 -: friction clutch
- 12 -: friction segment
- 13 -: first channel opening
- 14 -: rear flange
- 15 -: second channel opening
- 16 -: bearing

## Claims

1. An electro-pneumatic drive unit, mainly for driving of high-speed spindles, which includes a body (1) with an electric engine (3), and includes a pneumatic engine (6) with a turbine (7) and with an input and an output of a propulsion air; where the electric engine (3) has a rotor (4) and a stator (5), whereby the pneumatic engine (6) is placed in the body (1) coaxially with the electric engine (3); rotation of the rotor (4) of the electric engine (3) and the rotation of the turbine (7) of the pneumatic engine (6) are mechanically coupled; the output of the propulsion air from the pneumatic engine (6) is connected with an inside of the electric engine (3) in order to achieve a cooling of the rotor (4) and/or the stator (5), **is characterized by the fact, that** an central shaft (2) of the electric engine (3) is connected with a shaft of the pneumatic engine (6) with the inbuilt turbine (7) by a serial constructional connection; the sheath (8) of the pneumatic engine (6) follows upon the sheath (10) of the electric engine (3) in such a way, that air channels of a two-zone air cooling are arranged between the pneumatic engine (6) and the electric engine (3) in a circle, whereby the pneumatic engine (6) has at least one opening for an intake of the air; the two-zone air cooling consists of ribbing (9) of first stator axial channels with first output channel openings (13), which are alternately placed in the ribbing (9) with second stator axial channels with second output channel openings (15), whereby the first stator axial channels with the first output channel openings (13) and the second stator axial channels with the second output channel openings (15) are covered by the sheath (10) of the stator (5), whereby ends of the axial channels on a side opposite to a position of the respective channel opening (13, 15) hang over an edge of the sheath (10) for the output of the air out of the electric engine (3) and the sheath (10) is axially slidable for purposes of setting of the flow of the air in the first and the second axial channels.

2. The electro-pneumatic drive unit, mainly for driving of the high-speed spindles, according to the claim 1, is **characterized by the fact, that** outer sheaths (8, 10) of the pneumatic engine (6) and an electric engine (3) follow upon each other and/or a difference between their outer diameters is less than 50%.

3. The electro-pneumatic drive unit, mainly for driving of the high-speed spindles, according to the claim 1 or 2, **is characterized by the fact**, **that** there is a gap between the rotor (4) and the stator (5) for a flow of the air led from the output of the pneumatic engine (6).

4. The electro-pneumatic drive unit, mainly for driving of the high-speed spindles, according to any of the claims 1 to 3, is **characterized by the fact**, **that** the rotor (4) and the turbine (7) are placed on a common shaft.

5. The electro-pneumatic drive unit, mainly for driving of the high-speed spindles, according to any of the claim 1 to 4, **is characterized by the fact**, **that** the serial constructional connection of the central shaft (2) with the pneumatic engine (6) is formed by a conic friction clutch (11) with a conic protrusion on an end of the central shaft (2) with grooves, whereby friction segments (12) are placed in the grooves, and on the other side it is formed by a conic opening in an end of the shaft of the pneumatic engine (6).

6. The electro-pneumatic drive unit, mainly for driving of the high-speed spindles, according to any of the claims 1 to 5, **is characterized by the fact**, **that** the channel openings (13, 15) connect an inner space of the stator (5) with the axial channels, where the respective channel opening (13, 15) is place on one end of the axial channel and the sheath (10) with its open edge produces the output for the air on the opposite side of the axial channel.

7. The electro-pneumatic drive unit, mainly for driving of the high-speed spindles, according to the claim 6, is **characterized by the fact, that** the channel openings (13, 15) of the neighboring axial channels are placed in a mutually opposite way or a group of the channel openings (13, 15) is placed in the opposite way to the group of the channel openings (13, 15) of the neighboring group of the axial channels.

8. The electro-pneumatic drive unit, mainly for driving of the high-speed spindles, according to any of the claims 1 to 7, **is characterized by the fa**c**t**, **that** a performance of the electric engine (3) is more than 60%of the overall performance of the electro-pneumatic drive unit.

9. The electro-pneumatic drive unit, mainly for driving of the high-speed spindles, according to any of the claims 1 to 7, is **characterized by the fact**, **that** a performance of the electric engine (3) is more than 80% of the overall performance of the electro-pneumatic drive unit.

10. The electro-pneumatic drive unit, mainly for driving of the high-speed spindles, according to any of the claims 1 to 9, is **characterized by the fact**, **that** the electric engine (3) is equipped by a temperature sensor.

## Patentansprüche

1. Elektropneumatische Antriebseinheit, insbesondere zum Antrieb von Hochgeschwindigkeitsdrehspindeln, die ein Gehäuse (1) mit einem Elektromotor (3) und einen Druckluftmotor (6) mit einer Turbine (7) und einem Einlass und Auslass für Antriebsluft umfasst; wobei der Elektromotor (3) einen Rotor (4) und einen Stator (5) aufweist, der Druckluftmotor (6) in einem Gehäuse (1) koaxial zum Elektromotor (3) angeordnet ist, die Drehung des Rotors (4) des Elektromotors (3) und die Drehung der Turbine (7) des Druckluftmotors (6) mechanisch gekoppelt sind, wobei der Antriebsluftauslass des Druckluftmotors (6) mit dem Inneren des Elektromotors (3) verbunden ist, um eine Kühlung des Rotors (4) und/oder des Stators (5) zu erreichen, **dadurch gekennzeichnet, dass** die zentrale Welle (2) des Elektromotors (3) durch eine serielle Konstruktionsverbindung mit der Welle des Druckluftmotors (6) mit eingebauter Turbine (7) verbunden ist; der Mantel (8) des Druckluftmotors (6) schließt an den Mantel (10) des Elektromotors (3) so, dass zwischen dem Druckluftmotor (6) und dem Elektromotor (3) ringförmig angeordnete Luftkanäle einer Zweizonen-Luftkühlung vorhanden sind, wobei der Druckluftmotor (6) mindestens eine Öffnung für die Luftzufuhr aufweist; die Zweizonen-Luftkühlung besteht aus einer Verrippung (9) der ersten axialen Statorkanäle mit den ersten Auslasskanalöffnungen (13), die abwechselnd in der Verrippung (9) mit zweiten axialen Statorkanälen mit zweiten Auslasskanalöffnungen (15) angeordnet sind, wobei die ersten axialen Statorkanäle mit den ersten Kanalauslassöffnungen (13) und die zweiten axialen Statorkanäle mit den zweiten Kanalauslassöffnungen (15) durch den Mantel (10) des Stators (5) abgedeckt sind, wobei die Enden der Axialkanäle auf der der Position der jeweiligen Kanalöffnung (13, 15) über den Rand des Mantels (10) hinausragen, um Luft aus dem Elektromotor (3) ausströmen zu lassen, und der Mantel (10) axial verschiebbar ist, um den Luftstrom in den ersten und zweiten axialen Kanälen einzustellen.

2. Elektropneumatische Antriebseinheit, insbesondere zum Antrieb von Hochgeschwindigkeitsdrehspindeln, gemäß Anspruch 1, **dadurch gekennzeichnet, dass** die Außenmäntel (8, 10) des Druckluftmotors (6) und des Elektromotors (3) aneinander anschließen und/oder sich in ihren Außendurchmessern um weniger als 50 % unterscheiden.

3. Elektropneumatische Antriebseinheit, insbesondere zum Antrieb von Hochgeschwindigkeitsdrehspindeln, gemäß Anspruch 1 oder 2, **dadurch gekennzeichnet, dass** zwischen dem Rotor (4) und dem Stator (5) ein Spalt für den Luftstrom vorhanden ist, der vom Ausgang des Druckluftmotors (6) zugeführt wird.

4. Elektropneumatische Antriebseinheit, insbesondere zum Antrieb von Hochgeschwindigkeitsdrehspindeln, gemäß einem der Ansprüche 1 bis 3, **dadurch gekennzeichnet, dass** der Rotor (4) und die Turbine (7) auf einer gemeinsamen zentralen Welle (2) gelagert sind.

5. Elektropneumatische Antriebseinheit, insbesondere zum Antrieb von Hochgeschwindigkeitsdrehspindeln, gemäß einem der Ansprüche 1 bis 4, **dadurch gekennzeichnet, dass** die serienmäßige Konstruktionsverbindung der zentralen Welle (2) mit dem Druckluftmotor (6) durch eine konische Reibungskupplung (11) mit einem konischen Vorsprung am Ende der zentralen Welle (2) mit Nuten gebildet wird, wobei die Reibsegmente (12) in den Nuten gelagert sind, und auf der anderen Seite durch eine konische Öffnung am Ende der Welle des Druckluftmotors (6) gebildet wird.

6. Elektropneumatische Antriebseinheit, insbesondere zum Antrieb von Hochgeschwindigkeitsdrehspindeln, gemäß einem der Ansprüche 1 bis 5, **dadurch gekennzeichnet, dass** die Kanalöffnungen (13, 15) den Innenraum des Stators (5) mit den Axialkanälen verbinden, wobei die jeweilige Kanalöffnung (13, 15) an einem Ende des Axialkanals angeordnet ist und der Mantel (10) mit seinem offenen Rand einen Luftaustritt auf der gegenüberliegenden Seite dieses Axialkanals bildet.

7. Elektropneumatische Antriebseinheit, insbesondere zum Antrieb von Hochgeschwindigkeitsdrehspindeln, gemäß Anspruch 6, **dadurch gekennzeichnet, dass** die Kanalöffnungen (13, 15) benachbarter Axialkanäle gegenüberliegend angeordnet sind oder eine Gruppe von Kanalöffnungen (13, 15) gegenüber einer Gruppe von Kanalöffnungen (13, 15) einer benachbarten Gruppe von Axialkanälen angeordnet ist.

8. Elektropneumatische Antriebseinheit, insbesondere zum Antrieb von Hochgeschwindigkeitsdrehspindeln, gemäß einem der Ansprüche 1 bis 7, **dadurch gekennzeichnet, dass** die Leistung des Elektromotors (3) mehr als 60 % der Gesamtleistung der elektropneumatischen Antriebseinheit ausmacht.

9. Elektropneumatische Antriebseinheit, insbesondere zum Antrieb von Hochgeschwindigkeitsdrehspindeln, gemäß einem der Ansprüche 1 bis 7, **dadurch gekennzeichnet, dass** die Leistung des Elektromotors (3) mehr als 80 % der Gesamtleistung der elektropneumatischen Antriebseinheit ausmacht.

10. Elektropneumatische Antriebseinheit, insbesondere zum Antrieb von Hochgeschwindigkeitsdrehspindeln, gemäß einem der Ansprüche 1 bis 9, **dadurch gekennzeichnet, dass** der Elektromotor (3) mit einem Temperatursensor ausgestattet ist.

## Revendications

1. Unité d'entraînement électropneumatique, en particulier pour l'entraînement de broches à grande vitesse, comprenant un corps (1) avec un moteur électrique (3) et comprenant un moteur pneumatique (6) avec une turbine (7) et avec une entrée et une sortie d'air de commande, le moteur électrique (3) comportant un rotor (4) et un stator (5), le moteur pneumatique (6) étant disposé dans le corps (1) de manière coaxiale avec le moteur électrique (3), la rotation du rotor (4) du moteur électrique (3) et la rotation de la turbine (7) du moteur pneumatique (6) étant mécaniquement couplées, la sortie d'air de commande du moteur pneumatique (6) étant reliée à l'intérieur du moteur électrique (3) afin d'assurer le refroidissement du rotor (4) et/ou du stator (5), **caractérisée en ce qu'une** arbre central (2) du moteur électrique (3) est relié, par une liaison structurelle en série, à l'arbre du moteur pneumatique (6) intégrant la turbine (7), un carter (8) du moteur pneumatique (6) prolongeant un carter (10) du moteur électrique (3) de telle manière qu'entre le moteur pneumatique (6) et le moteur électrique (3) sont disposés, en cercle, des canaux d'air de refroidissement à deux zones, le moteur pneumatique (6) comprenant au moins une ouverture d'admission d'air, le refroidissement d'air à deux zones comprenant des nervures (9) formant des premiers canaux axiaux statoriques avec des premières ouvertures de sortie (13), lesquelles sont disposées alternativement avec des seconds canaux axiaux statoriques présentant des secondes ouvertures de sortie (15), les premiers canaux axiaux statoriques avec les premières ouvertures de sortie (13) et les seconds canaux axiaux statoriques avec les secondes ouvertures de sortie (15) étant recouverts par le carter (10) du stator (5), les extrémités des canaux axiaux du côté opposé à la position des ouvertures de sortie correspondantes (13, 15) dépassant le bord du carter (10) pour permettre l'évacuation de l'air hors du moteur électrique (3),et le carter (10) étant axialement mobile afin de régler l'écoulement d'air dans les premiers et seconds canaux axiaux.

2. Unité d'entraînement électropneumatique, en particulier pour l'entraînement de broches à grande vitesse, selon la revendication 1, **caractérisée en ce que** les carters extérieurs (8, 10) du moteur pneumatique (6) et du moteur électrique (3) se prolongent l'un l'autre et/ou diffèrent par leurs diamètres extérieurs de moins de 50 %.

3. Unité d'entraînement électropneumatique, en particulier pour l'entraînement de broches à grande vitesse, selon la revendication 1 ou 2, **caractérisée en ce qu'un** espace est prévu entre le rotor (4) et le stator (5) pour le passage de l'air provenant de la sortie du moteur pneumatique (6).

4. Unité d'entraînement électropneumatique, en particulier pour l'entraînement de broches à grande vitesse selon l'une quelconque des revendications 1 à 3, **caractérisée en ce que** le rotor (4) et la turbine (7) sont montés sur un arbre central commun (2).

5. Unité d'entraînement électropneumatique, en particulier pour l'entraînement de broches à grande vitesse, selon l'une quelconque des revendications 1 à 4, **caractérisée en ce que** la liaison structurelle en série de l'arbre central (2) avec le moteur pneumatique (6) est formée par un embrayage conique à friction (11) comportant une saillie conique à l'extrémité de l'arbre central (2) munie de rainures, des segments de friction (12) étant logés dans les rainures, et comportant, à l'autre extrémité, un orifice conique à l'extrémité de l'arbre du moteur pneumatique (6).

6. Unité d'entraînement électropneumatique, en particulier pour l'entraînement de broches à grande vitesse, selon l'une quelconque des revendications 1 à 5, **caractérisée en ce que** les ouvertures de canal (13, 15) relient l'espace intérieur du stator (5) aux canaux axiaux, chaque ouverture de canal (13, 15) étant située à une extrémité du canal axial, et le carter (10) formant par son bord ouvert une sortie d'air du côté opposé dudit canal axial.

7. Unité d'entraînement électropneumatique, en particulier pour l'entraînement de broches à grande vitesse, selon la revendication 6, **caractérisée en ce que** les ouvertures de canal (13, 15) des canaux axiaux adjacents sont disposées en position opposée, ou qu'un groupe d'ouvertures de canal (13, 15) est disposé en position opposée à un groupe d'ouvertures de canal (13, 15) d'un groupe adjacent de canaux axiaux.

8. Unité d'entraînement électropneumatique, en particulier pour l'entraînement de broches à grande vitesse, selon l'une quelconque des revendications 1 à 7, **caractérisée en ce que** la puissance du moteur électrique (3) représente plus de 60 % de la puissance totale de l'unité d'entraînement électropneumatique.

9. Unité d'entraînement électropneumatique, en particulier pour l'entraînement de broches à grande vitesse, selon l'une quelconque des revendications 1 à 7, **caractérisée en ce que** la puissance du moteur électrique (3) représente plus de 80 % de la puissance totale de l'unité d'entraînement électropneumatique.

10. Unité d'entraînement électropneumatique, en particulier pour l'entraînement de broches à grande vitesse, selon l'une quelconque des revendications 1 à 9, **caractérisée en ce que** le moteur électrique (3) est équipé d'un capteur de température.
